# FASCICULE DE BREVET EUROPEEN

(11) **EP 0 939 727 B1**
(45) Date de publication et mention de la délivrance du brevet: **24.01.2001**
(21) Numéro de dépôt: 97947079.6
(22) Date de dépôt: 18.11.1997
(51) Int. Cl.: B64G 1/44, F16C 11/04

(54) **JOINT D'ARTICULATION AUTOMOTEUR, AUTO-VERROUILLANT ET AMORTISSANT ET ARTICULATION EQUIPEE DE TELS JOINTS**
AUTOMATISCHE GELENKVERBINDUNG, SELBSTVERRIEGELND UND DÄMPFEND UND MIT SOLCHER VERBINDUNG AUSGESTETTETES GELENK
AUTOMOTIVE, SELF-LOCKING AND DAMPING ARTICULATED JOINT AND ARTICULATION EQUIPPED WITH SAME

(30) Priorité: 19.11.1996 FR 9614416
(43) Date de publication de la demande: 08.09.1999
(73) Titulaire: METRAVIB R.D.S. Société Anonyme, 69760 Limonest (FR); CENTRE NATIONAL D'ETUDES SPATIALES, 75001 Paris (FR)
(72) Inventeur: DUPERRAY, Bernard, F-01480 Ars (FR); DONZIER, Alain, F-69730 Genay (FR); SICRE, Jacques, F-31400 Toulouse (FR)
(74) Mandataire: Thibault, Jean-Marc
(86) Numéro de dépôt international: FR9702069
(87) Numéro de publication internationale: WO9822343

(56) Documents cités:
- FR-A- 2 635 077
- US-A- 3 386 128
- US-A- 4 885 820

## Description

### DOMAINE TECHNIQUE :

La présente invention concerne le domaine technique des éléments de liaison entre des pièces ou des éléments au sens général, permettant un déplacement angulaire entre les pièces assemblées et elle vise, plus particulièrement, les articulations adaptées pour assurer le déploiement automatique des deux éléments réunis, ainsi que leur auto-verrouillage en position déployée.

### TECHNIQUE ANTERIEURE :

Dans le domaine préféré d'application de l'invention, à savoir le domaine spatial, il est connu de réaliser l'articulation des panneaux solaires des satellites à l'aide de charnières qui se caractérisent par un manque de fiabilité et par l'existence de frottements entre les pièces en contact. De plus, ces articulations sont équipées d'une motorisation pour assurer le déplacement des panneaux solaires. Ce type d'articulation, qui présente des frottements importants, impose de surdimensionner la motorisation pour obtenir une marge suffisante de déploiement des panneaux. Dans le cas où les frottements sont faibles, les chocs en fin de déploiement des panneaux sont, par conséquent, importants. Pour limiter ces chocs, il est prévu d'adjoindre à ces articulations un système de régulation de vitesse, ce qui conduit à la mise en oeuvre d'une articulation relativement complexe.

Pour tenter de remédier à ces inconvénients, les brevets **US 3 386 128** et **FR 2 635 077** ont proposé de relier les deux éléments articulés au moyen de plusieurs lames élastiques à section en arc de cercle fixées chacune par leur extrémité sur les deux éléments articulés. Chaque joint d'articulation ainsi formé, appelé aussi joint de Carpentier, est destiné à être replié en vue d'appliquer entre les éléments réunis, un couple moteur qui tend à les déployer automatiquement. En position déployée des lames élastiques, celles-ci exercent un effort de verrouillage entre les éléments articulés. Il est ainsi obtenu une articulation automotrice et autoverrouillante.

Il apparaît, toutefois, que ce type d'articulation présente un premier inconvénient relatif à la non maîtrise du verrouillage en position déployée des éléments. En effet, lorsque le joint d'articulation atteint sa position déployée, la vitesse d'ouverture n'est pas nulle, de sorte qu'il peut être obtenu soit un dépassement de la position d'équilibre conduisant à un déverrouillage, soit un mouvement de rebond conduisant à la refermeture de l'articulation.

Une telle articulation présente un autre inconvénient qui est l'apparition de chocs lors du verrouillage de l'articulation. En effet, lors de ce verrouillage, l'énergie cinétique résiduelle amène l'articulation à osciller autour de sa position d'équilibre. Les pièces de liaison sont donc soumises à des forces qui sont d'autant plus grandes que cette énergie cinétique résiduelle est importante. De telles sollicitations imposent de surdimensionner les éléments de liaison.

### EXPOSE DE L'INVENTION :

L'objet de l'invention vise donc à remédier aux inconvénients énoncés ci-dessus en proposant un joint d'articulation destiné à réunir deux éléments au sens général, et à assurer des fonctions d'automotorisation et d'auto-verrouillage, le joint d'articulation étant conçu pour maîtriser le verrouillage des éléments en position déployée et pour réduire, voire éliminer, les chocs lors du verrouillage de l'articulation.

Pour atteindre cet objectif, l'objet de l'invention vise à réaliser un joint d'articulation auto-moteur, auto-verrouillant et présentant une capacité d'amortissement.

Conformément à l'invention, le joint d'articulation selon l'invention est destiné à être monté entre deux éléments voisins, du type constitué par au moins une bande élastique préformée à section courbe et conçue pour être solidarisée par ses deux extrémités, aux deux éléments et occuper une position repliée et une position déployée.

Conformément à l'invention, chaque bande élastique est pourvue d'une couche d'un matériau viscoélastique interposé entre l'une des faces de la bande élastique et une plaque de contrainte, de manière à obtenir une articulation assurant également une fonction d'amortissement.

Un autre objet de l'invention vise à réaliser une articulation comportant un assemblage de joints d'articulation conformes à l'invention. Selon un exemple préféré de réalisation, l'articulation comporte un premier et un deuxième assemblages formés chacun de trois joints d'articulation répartis selon deux plans.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

### BREVE DESCRIPTION DES DESSINS :

La **fig. 1** est une vue schématique partielle montrant un exemple de réalisation d'une articulation conforme à l'invention, placée en position repliée.

La **fig. 2** est une vue de dessus de l'articulation illustrée à la **fig. 1**, placée en position déployée.

La **fig. 3** est une vue de détail en élévation d'un joint d'articulation conforme à l'invention.

La **fig. 4** est une coupe longitudinale prise sensiblement selon les lignes IV-IV de la **fig. 3**.

La **fig. 5** est une coupe transversale prise sensiblement selon les lignes V-V de la **fig. 3**.

La **fig. 6** est une coupe en élévation prise sensiblement selon les lignes VI-VI de la **fig. 2**.

### MEILLEURE MANIERE DE REALISER L'INVENTION :

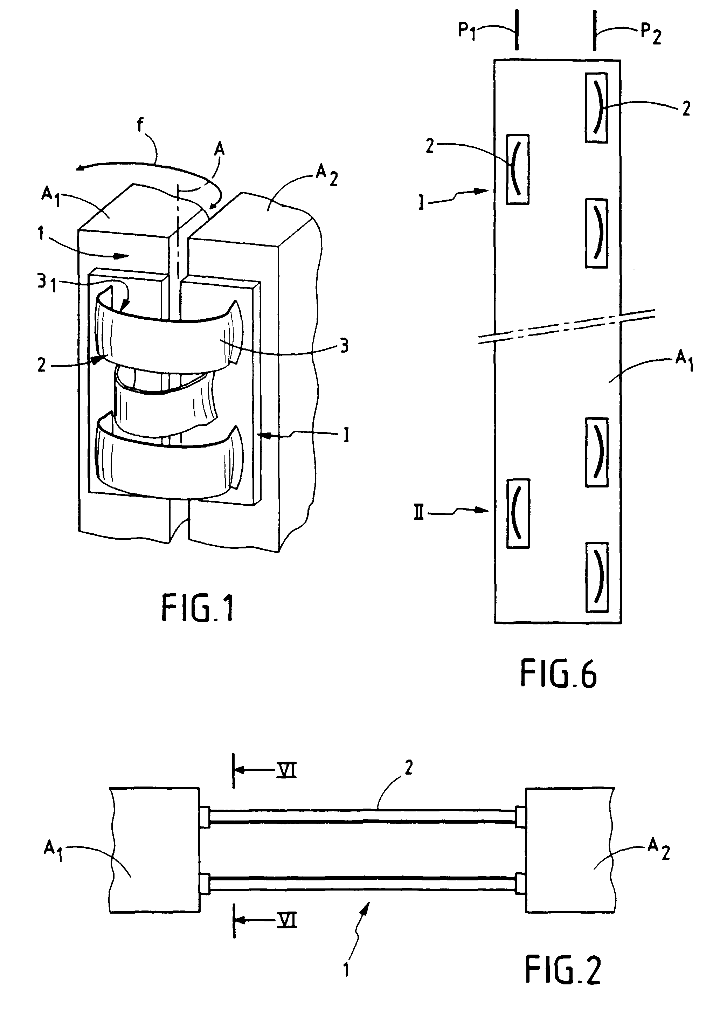

Les **fig. 1** et **2** illustrent un exemple de réalisation d'une articulation **1** conforme à l'invention destinée à être montée entre deux pièces ou éléments voisins **A**_{**1**} et **A**_{**2**} de toute nature et forme appropriées. L'articulation **1** est conçue pour passer d'une position dite repliée, illustrée par la **fig. 1**, à une position dite déployée, montrée à la **fig. 2**, permettant d'obtenir un déplacement relatif des pièces **A**_{**1**}, **A**_{**2**} de 180 ° autour d'un axe fictif de pivotement **A**. Dans l'exemple illustré aux **fig. 1** et **2**, l'articulation **1** est composée d'une série de joints d'articulation **2** conformes à l'invention assurant une fonction automotrice, auto-verrouillante et amortissante.

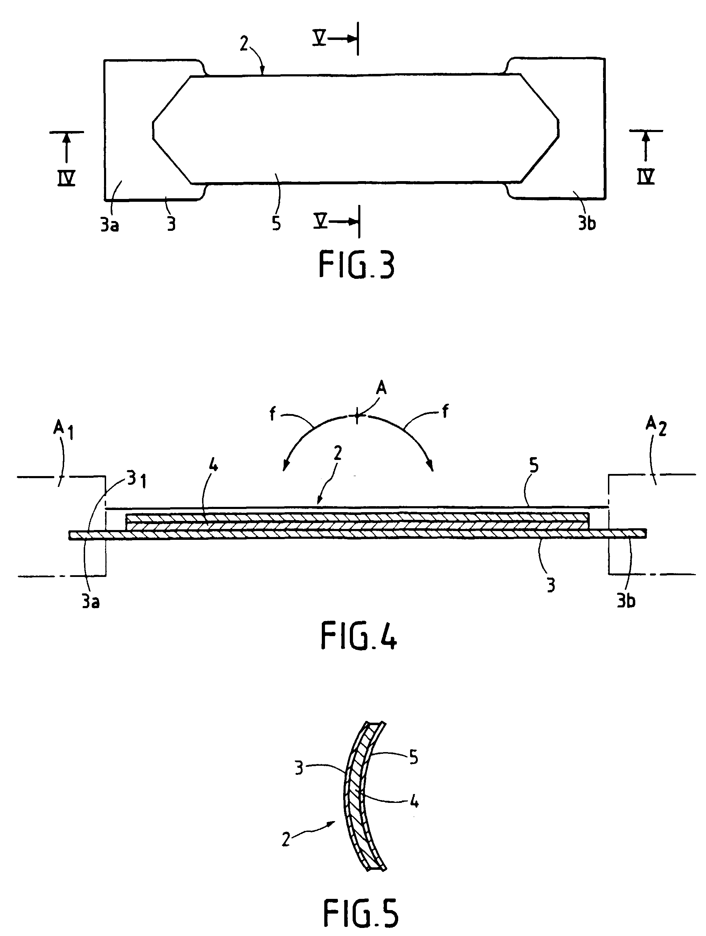

Tel que cela ressort plus précisément des **fig. 3** à **5**, chaque joint d'articulation **2** comporte une bande élastique **3** préformée à section droite transversale courbe. Par exemple, cette bande élastique peut être constituée, à partir d'un ruban métallique ayant une section droite en arc de cercle. Au repos ou en position de verrouillage, chaque bande élastique **3** occupe une position rectiligne avec une section incurvée, tandis qu'en position repliée selon une direction transversale, la bande élastique possède un couple moteur ayant tendance à la remettre dans sa position rectiligne ou de verrouillage qu'elle conserve.

Conformément à l'invention, chaque bande élastique **3** est pourvue d'une couche **4** d'un matériau viscoélastique interposé entre l'une des faces **3**_{**1**} de la bande élastique et une plaque de contrainte **5**. Le matériau viscoélastique **4** est donc pris en sandwich ou serré sur toute sa surface, entre la bande **3** et la plaque de contrainte **5**. Le matériau viscoélastique **4** adhère, par exemple, par collage à la bande **3** et à la plaque **5**. La bande **3** et la plaque **5** présentent chacune une raideur élevée permettant d'obtenir le stockage d'une énergie mécanique relativement importante dans le matériau viscoélastique, en vue d'offrir un amortissement efficace. En vue d'augmenter le cisaillement du matériau viscoélastique, il peut être prévu de solidariser entre-elles, par exemple à l'aide d'un rivet, la bande **3** et la plaque **5** à l'une de leurs extrémités.

Lors de l'ouverture du joint d'articulation, c'est-à-dire du passage de la position repliée à la position déployée, l'énergie dissipée par cisaillement du matériau viscoélastique **4** permet d'obtenir l'amortissement du joint d'articulation. La variation du module d'élasticité du matériau viscoélastique en fonction de la rapidité de la sollicitation permet de moduler l'intensité du couple moteur du joint d'articulation en fonction de sa vitesse d'ouverture. Ainsi, dans le cas d'une ouverture difficile de l'articulation, peu d'énergie est dégradée alors que dans le cas d'une ouverture facile, le déplacement de l'articulation est fortement amorti. Le matériau viscoélastique est choisi de sorte qu'une partie suffisante de l'énergie soit dissipée pendant l'ouverture du joint, afin que le verrouillage soit stable. De plus, le matériau viscoélastique est sélectionné pour être efficace sur toute la plage de températures d'utilisation et pour les fréquences mises en oeuvre relevant du domaine statique ou quasi-statique. A titre d'exemple, il peut être envisagé d'utiliser, en tant que matériau viscoélastique, un polymère acrylique appartenant à la famille des produits commercialisés par la société 3M sous la référence ISD.

Selon une caractéristique préférée de l'invention, la couche de matériau viscoélastique **4** et la plaque de contrainte **5** sont adaptées sur la bande selon une mesure inférieure à la longueur de la bande. La couche de matériau viscoélastique **4** et la plaque de contrainte **5** sont ainsi montées sur une partie centrale de la bande **3**, de sorte que la bande **3** dépasse, de part et d'autre, par des parties terminales **3a** et **3b**. Afin d'éviter un pliage du joint au niveau de ces parties terminales non recouvertes par le matériau **4** et la plaque **5**, la raideur des parties terminales **3a**, **3b** est augmentée. Par exemple, les parties terminales **3a**, **3b** de la bande présentent une largeur supérieure à la largeur de la partie centrale de la bande. Le joint d'articulation **2** est donc forcé à être plié dans sa partie centrale équipée du matériau viscoélastique **4** et de la plaque de contrainte **5**. En évitant le pliage du joint dans ses zones d'extrémités dépourvues de matériau viscoélastique, le joint d'articulation est à même de toujours assurer sa fonction d'amortissement.

Selon une autre caractéristique préférée de l'invention, la couche de matériau viscoélastique **4** et la plaque de contrainte **5** sont situées sur la face interne de la bande **3**, considérée lorsque le joint d'articulation **2** occupe sa position pliée. Ainsi, tel que cela ressort des **fig. 1** et **4**, la couche de matériau viscoélastique **4** est placée sur la face interne **3**_{**1**} de la bande **3** par rapport au sens d'ouverture de l'articulation représenté par les flèches **f**. Le positionnement du matériau viscoélastique **4** et de la plaque de contrainte **5** du côté interne de l'articulation permet d'éviter la traction du matériau viscoélastique aux extrémités du joint de contrainte et, par suite, son décollage.

Selon une autre caractéristique préférée de l'invention, la couche de matériau viscoélastique **4** et la plaque de contrainte **5** présentent des parties terminales biseautées ou tronquées permettant de minimiser les risques de pelage (**fig. 3**).

Selon une autre caractéristique préférée de l'invention, la couche de matériau viscoélastique **4** est montée sur la bande élastique, de manière que le matériau ne se trouve pas contraint, en position repliée du joint d'articulation. A cet effet, le matériau viscoélastique est monté sur la bande élastique lorsque cette dernière occupe une position repliée.

Le joint d'articulation selon l'invention est monté de toute manière appropriée par ses deux extrémités **3a, 3b** sur les éléments à réunir **A**_{**1**}, **A**_{**2**}. Selon une variante préférée de réalisation, les extrémités **3a** et **3b** sont montées de manière encastrée sur les éléments **A**_{**1**}, **A**_{**2**} à réunir, comme illustré à la **fig. 4**.

Les **fig. 1, 2** et **6** illustrent un exemple préféré de mise en oeuvre de joints d'articulation **2** conformes à l'invention pour réaliser une articulation **1** pour deux pièces **A**_{**1**}, **A**_{**2**}. L'articulation **1** comporte une série et, de préférence, un premier assemblage **I** et un deuxième assemblage **II** formés chacun de trois joints d'articulation **2**, tels que décrits ci-dessus. Pour chaque assemblage, l'un des joints **2** est monté dans un plan **P**_{**1**}, tandis que les deux autres joints **2** sont montés dans un autre plan **P**_{**2**} distant du plan **P**_{**1**}. Chaque joint **2** placé dans le plan **P**_{**1**} est situé à un niveau intermédiaire par rapport aux deux autres joints placés dans le plan **P**_{**2**}. Tel que cela ressort plus précisément de la **fig. 6**, les joints **2** sont montés de manière que les concavités des joints placés dans les plans **P**_{**1**} et **P**_{**2**} soient tournées en sens contraire. De plus, l'unique joint placé dans le plan **P**_{**1**} est monté de façon, qu'en position pliée, sa concavité se trouve tournée vers l'extérieur. Dans ces conditions, l'unique joint placé dans le plan **P**_{**1**} présente un couple moteur plus important que celui développé par les deux autres joints placés dans le plan **P**_{**2**}.

Dans l'exemple qui précède, les éléments **A**_{**1**} et **A**_{**2**} sont articulés uniquement à l'aide des joints **2**. Bien entendu, il peut être envisagé de relier les éléments **A**_{**1**}, **A**_{**2**} par un système de guidage tel que, par exemple, un axe de rotation ou une rotule.

## Revendications

1. Joint d'articulation automoteur et auto-verrouillant, destiné à être monté entre deux éléments voisins (**A**_{**1**}, **A**_{**2**}), du type constitué par au moins une bande élastique (**3**) préformée à section courbe et conçue pour être solidarisée, par ses deux extrémités, aux deux éléments et occuper une position repliée et une position déployée,
caractérisée en ce que chaque bande élastique (**3**) est pourvue d'une couche d'un matériau viscoélastique (**4**) interposé entre l'une des faces de la bande élastique (**3**) et une plaque de contrainte (**5**), de manière à obtenir une articulation assurant également une fonction d'amortissement.

2. Joint d'articulation selon la revendication 1, caractérisé en ce que la couche de matériau viscoélastique (**4**) est placée sur la face (**3**_{**1**}) de la bande, située du côté interne lorsque le joint d'articulation occupe sa position repliée.

3. Joint d'articulation selon la revendication 1 ou 2, caractérisé en ce que la couche de matériau viscoélastique (**4**) et la plaque de contrainte (**5**) sont montées sur une partie centrale limitée de la bande pour laisser subsister de part et d'autre, des parties terminales (**3**_{**1**}**, 3**_{**2**}) de la bande présentant une raideur supérieure à la partie centrale pour obtenir un pliage du joint selon cette partie centrale.

4. Joint d'articulation selon l'une des revendications 1 à 3, caractérisé en ce que la couche de matériau viscoélastique (**4**) et la plaque de contrainte (**5**) présentent des parties terminales biseautées.

5. Joint d'articulation selon l'une des revendications 1 à 4, caractérisé en ce que la couche de matériau viscoélastique (**4**) est montée sur la bande élastique (**3**), de manière que le matériau ne se trouve pas contraint en position repliée du joint d'articulation.

6. Joint d'articulation selon l'une des revendications 1 à 5, caractérisé en ce que la plaque de contrainte (**5**) et la bande élastique (**3**) sont fixées entre-elles à l'une de leurs extrémités, pour augmenter le cisaillement du matériau viscoélastique (**4**).

7. Joint d'articulation selon l'une des revendications 1 à 6, caractérisé en ce que la bande élastique est montée par ses deux extrémités, de manière encastrée sur les deux éléments.

8. Articulation automotrice, auto-verrouillante et amortissante, montée entre deux éléments voisins (**A**_{**1**}, **A**_{**2**}), caractérisée en ce qu'elle comporte au moins un joint d'articulation conforme à l'une des revendications 1 à 7.

9. Articulation selon la revendication 8, caractérisée en ce qu'elle comporte un premier (**I**) et un deuxième (**II**) assemblages formés chacun de trois joints d'articulation (**2**) répartis selon deux plans (**P**_{**1**}, **P**_{**2**}).

10. Articulation selon la revendication 9, caractérisée en ce que chaque joint (**2**) situé dans un plan (**P**_{**1**}), présente une concavité de sens contraire à celle des joints (**2**) situés dans l'autre plan.

## Claims

1. A self-driving and self-locking hinge strap for mounting between two adjacent elements (A₁, A₂), the strap being of the type constituted by at least one resilient strip (3) preformed to have a section that is curved and designed to be secured via its two ends to the two elements, and to occupy a folded position and a deployed position,
the strap being characterized in that each resilient strip (3) is provided with a layer of viscoelastic material (4) interposed between one of the faces of the resilient strip (3) and a stress plate (5) in such a manner as to provide a hinge that also performs a damping function.

2. A hinge strap according to claim 1, characterized in that the layer of viscoelastic material (4) is placed on the face (3,) of the strip which is situated on the inside when the hinge strap is occupying its folded position.

3. A hinge strap according to claim 1 or 2, characterized in that the layer of viscoelastic material (4) and the stress plate (5) are mounted on a limited central portion of the strip to leave terminal portions (3₁, 3₂) of the strip remaining at each end that are of stiffness greater than that of the central portion so as to cause the strap to fold in said central portion.

4. A hinge strap according to one of claims 1 to 3, characterized in that the layer of viscoelastic material (4) and the stress plate (5) have terminal portions that taper.

5. A hinge strap according to one of claims 1 to 4, characterized in that the layer of viscoelastic material (4) is mounted on the resilient strip (3) in such a manner that the material is not stressed when the hinge strap is in its folded position.

6. A hinge strap according to one of claims 1 to 5, characterized in that the stress plate (5) and the resilient strip (3) are fixed together at one of their ends, so as to increase the shear in the viscoelastic material (4).

7. A hinge strap according to one of claims 1 to 6, characterized in that the resilient strip is mounted via its two ends by being embedded in the two elements.

8. A self-driving, self-locking, and damping hinge mounted between two adjacent elements (A₁, A₂), characterized in that it includes at least one hinge strap according to one of claims 1 to 7.

9. A hinge according to claim 8, characterized in that it includes first and second assemblies (I, II) each constituted by three hinge straps (2) occupying two planes (P₁, P₂).

10. A hinge according to claim 9, characterized in that each strap (2) situated in a one plane (P₁) has its concave side facing in the opposite direction to the concave sides of the straps (2) situated in the other plane.

## Patentansprüche

1. Sich selbst betätigende und selbstverriegelnde Gelenkverbindung zum Anordnen zwischen zwei benachbarten Elementen (A₁, A₂), die von wenigstens einem vorgeformten elastischen Band (3) von gekrümmter Querschnittsgestalt gebildet ist, das zum festen Verbinden an seinen beiden Enden mit den beiden Elementen und zum Einnehmen einer umgebogenen und einer aufgeklappten Stellung bestimmt ist,
dadurch gekennzeichnet, daß jedes elastische Band (3) mit einer Schicht aus viskoelastischem Werkstoff (4) versehen ist, der zwischen einer der Flächen des elastischen Bandes (3) und einer Hemmplatte (5) so angeordnet ist, daß ein auch eine Dämpffunktion ausübendes Gelenk erhalten wird.

2. Gelenkverbindung nach Anspruch 1,
dadurch gekennzeichnet, daß die Schicht aus viskoelastischem Werkstoff (4) auf der Fläche (3₁) des Bandes angeordnet ist, die sich, wenn die Gelenkverbindung ihre umgebogene Stellung einnimmt, auf der Innenseite befindet.

3. Gelenkverbindung nach Anspruch 1 oder 2,
dadurch gekennzeichnet, daß die Schicht aus viskoelastischem Werkstoff (4) und die Hemmplatte (5) an einem begrenzten Mittelabschnitt des Bandes angeordnet sind, um beiderseits Endabschnitte (3₁, 3₂) des Bandes zu belassen, die eine größere Steifigkeit als der Mittelabschnitt aufweisen, um ein Umbiegen der Verbindung an diesem Mittelabschnitt zu erhalten.

4. Gelenkverbindung nach einem der Ansprüche 1 bis 3,
dadurch gekennzeichnet, daß die Schicht aus viskoelastischem Werkstoff (4) und die Hemmplatte (5) abgeschrägte Endabschnitte aufweisen.

5. Gelenkverbindung nach einem der Ansprüche 1 bis 4,
dadurch gekennzeichnet, daß die Schicht aus viskoelastischem Werkstoff (4) am elastischen Band (3) so angeordnet ist, daß der Werkstoff in der umgebogenen Stellung der Gelenkverbindung keiner Spannung ausgesetzt ist.

6. Gelenkverbindung nach einem der Ansprüche 1 bis 5,
dadurch gekennzeichnet, daß die Hemmplatte (5) und das elastische Band (3) aneinander an einem ihrer Enden befestigt sind, um die Scherung des viskoelastischen Werkstoffs (4) zu erhöhen.

7. Gelenkverbindung nach einem der Ansprüche 1 bis 6,
dadurch gekennzeichnet, daß das elastische Band mit seinen beiden Enden in die beiden Elemente eingespannt montiert ist.

8. Sich selbst betätigendes, selbstverriegelndes und dämpfendes Gelenk, das zwischen zwei benachbarten Elementen (A₁, A₂) angeordnet ist,
dadurch gekennzeichnet, daß es wenigstens eine Gelenkverbindung nach einem der Ansprüche 1 bis 7 aufweist.

9. Gelenk nach Anspruch 8,
dadurch gekennzeichnet, daß es eine erste (I) und eine zweite (II) Garnitur aufweist, die je von drei, auf zwei Ebenen (P₁, P₂) verteilten Gelenkverbindungen (2) gebildet sind.

10. Gelenk nach Anspruch 9,
dadurch gekennzeichnet, daß jede in einer Ebene (P1) angeordnete Verbindung (2) von einer Konkavität ist, die der der in der anderen Ebene angeordneten Verbindungen (2) entgegengesetzt ausgerichtet ist.
